# EUROPEAN PATENT APPLICATION

(11) **EP 4 140 580 A1**
(43) Date of publication of application: **01.03.2023**
(21) Application number: 21192538.3
(22) Date of filing: 23.08.2021
(51) Int. Cl.: B01J 35/10, C01B 32/00

(54) **NOVEL ACIDIC CARBONACEOUS MATERIALS AND THEIR APPLICATIONS**

(71) Applicant: Max-Planck-Gesellschaft zur Förderung der Wissenschaften e.V., 80539 München (DE)
(72) Inventor: ANTONIETTI, Markus, 14558 Nuthetal (DE); Al Naji, Majd, 14476 Potsdam (DE); Rothe, Regina, 14558 Nuthetal (DE)
(74) Representative: Deblon, Jörg-Stephan

(57) **Abstract**

The present invention relates to novel acidic carbonaceous materials, a facile process for their preparation as well as the use of such acidic carbonaceous materials in a broad variety of acid catalyzed reactions such as cracking of waste plastic.

## Description

### Field of the Invention

The present invention relates to novel acidic carbonaceous materials, a facile process for their preparation as well as the use of such acidic carbonaceous materials in a broad variety of acid catalyzed reactions such as cracking of waste plastic.

### Background

The backbone and starting point for the large scale production of petroleum-based raw materials and their plethora of down-stream products are acidic zeolites which are used as catalysts to crack down and isomerize long-chained hydrocarbons into smaller fragments.

The catalytic mechanism being the same, zeolites are also used to recycle synthetic long-chained hydrocarbons such as polypropylene and polyethylene (see e.g. WO2017103010A1) which is of increasing importance to reduce raw material consumption and pollution.

Zeolites are, however, highly prone to deactivation by polar components or coking and thus require well-defined reaction conditions and specified raw materials to achieve and maintain their optimum catalytic activity.

Carbonaceous materials, in particular in powder or granular form, have been used in industrial applications for a long time e.g. as sorbents in filters, decolouring agents in sugar refinery, as functional filler materials in tyre manufacturing or electrode material in accumulators as well as for carrier materials in heterogeneous catalysis just to name a few. The reasons for their widespread use are mainly their robustness, variability and low cost.

In recent years, modification and surface functionalization of carbonaceous materials to add catalytic capabilities or to improve their suitability as sorbent or electrode material has become subject of an increasing number of studies.

Specifically, lignosulfonates obtainable as a mass byproduct from cellulose manufacturing were already used to prepare powerful sorbent materials for heavy metal ions by hydrothermal carbonization, see [1] Yao et al., "Carbonized lignosulfonate-based porous nanocomposites for adsorption of environmental contaminants", Functional Composite Materials (2020), doi, https://doi.org/10.1186/s42252-020-00008-8.

Efficient toluene adsorption on metal salt-activated porous carbons derived from sodium lignin sulfate by carbonization at 500°C is discussed in B. Li, H. Xiong, Y. Xiao,J. Hu, X. Zhang, L. Li, and R. Wang, ACS Omega 2020, 5, 13196-13206 [2].

Qidu Deng et al, "Chemically modified self-doped biocarbon via novel sulfonation assisted sacrificial template method for high performance flexible all solid-state supercapacitor", Journal of Colloid and Interface Science 574, 2020, p. 33-42 [3] disclose the preparation of a multiporous material with pores of a size up to 3.5 nm obtained by high-temperature sulfonation of lignin followed by carbonization at 600°C, activiation with potassium hydroxide to induce pore formation at 700°C and final neutralization with hydrochloric acid. Such material showed a very high specific surface of 3195 m²/g and an improved suitability as material for supercapacitors.

In another approach to obtain supercapacitor materials nitrogen enriched porous carbon hollow microspheres were prepared from spray-dried sodium lignosulfonate / sodium hydroxide mixtures which were then carbonized at 700 to 900 °C and finally partially oxidized with concentrated nitric acid, see J. Pang, W.-F. Zhang, J.-L. Zhang, H.-M. Zhang, G.-P. Cao, M.-F. Han, Y.-S. Yang, ChemElectroChem 2018, 5, 1306 - 1320 [4]. The materials obtained by this multi-step procedure exhibit a sulfur content of between 0.26 and 0.53 wt.-%.

The production of highly acidic sulfonated carbons from kraft lignins employing a fractionation process combined with acid-assisted hydrothermal carbonization is disclosed in R. S. Nunesa , T. C. Tudinoa, L. M. Vieirab, D. Mandellia, W. A. Carvalhoa, Bioresource Technology, 303, 2020, 122882 [5].

A one-step fabrication of carbonaceous solid acid derived from lignosulfonate by acid hydrothermal treatment at 120°C for the synthesis of biobased furan derivatives is shown in X. Yu, L. Peng, X. Gao, L. He and K. Chen, RSC Adv., 2018, 8, 15762 [6].

Sulfur-containing carbonaceous materials obtained via carbonization at 900°C are already known from Xiaofeng, L.; Fechler, N.; Antonietti, M.; Willinger, M. G.; Schlögl, R. Mater. Horiz., 2016, 3, 214 [7]. Due to their preparation method that involves a condensation of a carbon source (glucose) that does not exhibit any acid sites or a respective functionalization step however, they do not comprise acidic sites as disclosed herein.

In Pua et al. Biotechnology for Biofuels 2011, 4:56 [8] preparation of a sulfonized catalyst for the esterification of Jatropha oils to biodiesel by treatment of lignin with phosphoric acid, pyrolysis at 400°C followed by sulfonation at 200°C with sulfuric acid is disclosed. Similar approaches are reviewed in Tan X., Sudarsana P., Tan J., Wang A., Zhang H., Li H., Yang S, "Sulfonic acid-functionalized heterogeneous catalytic materials for efficient biodiesel production: A review", Journal of Environmental Chemical Engineering (2020), doi: https://doi.org/10.1016/j.jece.2020.10471 [9].

Comprehensive overviews for "carbocatalysts" are further given in [10] Navalon, S.; Dhakshinamoorthy, A.; Alvaro, M.; Antonietti, M.; Garcia, H. "Active sites on graphene-based materials as metal-free catalysts", Chemical Society Reviews, 2017, 46, 4501-4529 and [11] Antonietti, M.; Lopez-Salas, N.; Primo, A., "Adjusting the Structure and Electronic Properties of Carbons for Metal Free Carbocatalysis of Organic Transformations", Advanced Materials , 2019, 31 , Article Number: 1805719 and J. Konwar, P. M. Arvela and J. P. Mikkola, "SO3H-Containing Functional Carbon Materials: Synthesis, Structure, and Acid Catalysis", Chem. Rev. 2019, 119, p. 11576 to 11630 [12].

In a first attempt to show suitability for polypropylene pyrolysis N. Premalatha, R. Prathiba, M. A. Miranda and L. R. Miranda, Journal of Material Cycles and Waste Management, [13] disclose a sulfonated carbon made from sugarcane bagasse that was able to convert polypropylene into a mixture of liquid products at 420°C with a yield of 86.14 % at a catalyst loading of 1:5 by weight.

The known functionalized carbonaceous materials, however, still show some disadvantages with regard to their stability at higher temperatures, efficiency and ease of manufacture which might currently prevent their commercial application.

In view of the aforementioned there was still a need for an easy-to-make and robust carbonaceous material which can be used as catalyst material in particular for acid catalyzed reactions such as depolymerization, (trans)esterification or isomerization.

### Summary of the Invention

According to one aspect of the invention, there is now provided a novel acidic carbonaceous material comprising
1) a sulfur content as measured by elemental analysis of 0.6 to 20.0 wt.%, preferably 1.0 to 20.0 wt-% and more preferably 3.0 to 20.0 wt-% and
2) a density of acidic sites (DAS) as measured by temperature programmed desorption of ammonia (NH₃-TPD) of at least 0.1 mmol/g, preferably at least 0.4 mmol/g, more preferably 0.4 to 5.0 mmol/g and yet even more preferably 0.4 to 2.0 mmol/g.

In another aspect the invention related to a process for the preparation of such acidic carbonaceous materials.

The invention further encompasses the use of the acidic carbonaceous materials according to the invention as catalysts, in particular as catalysts for acid catalyzed reactions such as depolymerization, (trans)esterification, or isomerization of organic compounds as well as the respective processes as such.

### Brief description of the drawings

Figures 1 and 2 show scanning electron microscope (SEM) pictures of the acidic carbonaceous material prepared according to example 1.
Figures 3 to 5 show pictures made by energy dispersive X-ray analysis (EDX) for the distribution of carbon (Fig. 3), oxygen (Fig. 4) and sulfur (Fig. 5) within the acidic carbonaceous material prepared according to example 1.
Figures 6 and 7 show thermogravimetric analyses (TGA) of the acidic carbonaceous material according to example 1 performed under nitrogen (N₂, Figure 6) and under synthetic air (80 vol-% N₂ and 20 vol-% O₂, Figure 7).
Figures 8 and 9 show the nitrogen (N₂) physisorption isotherm measured at 77K (Figure 8) and the pore size distribution (Figure 9) for the acid carbonaceous material obtained according to example 1.
Figures 10 to 12 show the profile plots of the temperature programmed desorption of ammonia (NH₃-TPD) measured for the acid carbonaceous material obtained according to example 1 having three different peaks indicating different acidic sites (figure 10), the materials of examples 2a and 2b (Figure 11) and of examples 2c and 2d (Figure 12).
Figures 13 to 15 show the XPS measurements of the bond energies for carbon, sulfur and oxygen within the acidic carbonaceous material according to example 1.
Figure 16 shows an exemplified and idealized structure of an acidic carbonaceous material according to the invention with three different acidic sites as described below.
Figure 17 shows the product distribution i.e. the yield of alkenes and alkanes from Cs-C₂₂ as measured by gas chromatography with flame ionization detector (GC-FID) of the liquid fraction obtained after HDPE depolymerization according to example 3.

### Detailed description of the Invention

The invention also encompasses all combinations of all levels of preferred embodiments or parameter ranges as disclosed hereinafter either with each other or with the broadest disclosed parameter range or embodiment.

Whenever used herein the terms "including", "for example", "e.g.", "such as" and "like" are meant in the sense of "including but without being limited to" or "for example without limitation", respectively.

### Carbonaceous materials

As used herein the term "carbonaceous material" generally denotes a material comprising
3) a carbon content of at least 50 wt-%, preferably of at least 60 wt-% and
4) a hydrogen content of at maximum 5.0 wt.-%, preferably 0.1 to 3.0 wt-% and more preferably 0.3 to 2.0 wt.-%
each as measured by elemental analysis.

Therefore, the term "acidic carbonaceous material according to the invention" or the "inventive acidic carbonaceous material" denotes a material exhibiting at least the features 1) and 2) and a) and b) set forth above.

In one embodiment the carbonaceous material according to the invention comprises a turbostratic structure.

As used herein, a "turbostratic structure" denotes a structure wherein carbon layers are arranged in a haphazardly folded or crumbled manner and thus the carbonaceous material shows broad carbon peaks at 2*θ* between 20° and 30° and 40° to 50° in X-ray diffraction.

In one embodiment the acidic carbonaceous material according to the invention has a nitrogen content of at maximum 3 wt.-%, preferably 0.1 to 3.0 wt-% and more preferably 1.0 to 1.8 wt-% as measured by elemental analysis.

In one embodiment the carbonaceous material according to the invention has an oxygen content of at maximum 25.0 wt.-%, preferably 0.1 to 25.0 wt.-%, more preferably 5.0 to 25.0 wt-% and even more preferred of 15.0 to 25.0 wt-% as measured by elemental analysis.

In one embodiment the weight ratio of sulfur and oxygen within the acidic carbonaceous material according to the invention is from 0.1 to 1.0, preferably from 0.2 to 0.9 and more preferably from 0.2 to 0.5 as measured by elemental analysis.

In one embodiment the carbonaceous material according to the invention has a pore volume (Vₚ) of 0.2 to 0.8 cm³/g, preferably of 0.2 to 0.7 cm³/g. With regard to pore size distribution the main fraction of the pore volume is observed for mesopores in the range of 2 to 10 nm. Therefore, in one embodiment, the mesopores of the carbonaceous material according to the invention in the size range of 2 to 10 nm account for 70 % or more of the total pore volume, preferably for 80 % or more.

In another embodiment the mesopores in a size range of 5 to 10 nm account for 20 % to 60 % of the total pore volume, preferably 80 % or more. In yet a further embodiment the pore size distribution is bimodal, i.e. the pore size distributions exhibits two maxima (one absolute and one relative maximum) with a distance of at least 1.0 nm and a relative minimum segregating the maxima having at maximum 80 % of at peak intensity of the relative maximum.

As used herein a mesoporous material is a material containing pores with diameters between 2 and 50 nm in compliance with to IUPAC nomenclature.

In one embodiment the acidic carbonaceous material according to the invention has a specific BET surface area (SSA_{BET}) of 100 to 2000 m²/g, preferably of 200 to 1500 m²/g, more preferably of 400 to 1200 m²/g.

In yet another embodiment the carbonaceous material according to the invention exhibits at least one relative maximum in the range of from 240 to 320°C in the temperature profile as measured by temperature programmed desorption of ammonia (NH₃-TPD).

In a further embodiment the carbonaceous material according to the invention exhibits a further relative maximum in the range of from 130 to 200°C.

In yet a further embodiment the carbonaceous material according to the invention exhibits a further relative maximum in the range of from 360 to 420°C.

In one embodiment, the acidic carbonaceous materials according to the invention exhibit two peaks for sulfur between 168.0 and 170.0 eV for S2p_{3/2} and S2p_{1/2} as measured by x-ray photoelectron spectroscopy (XPS).

Elemental analysis, the temperature programmed desorption of ammonia (NH₃-TPD) to determine the relative acidity and amount of acidic sites, the specific BET surface area (SSA_{BET}), the pore Volume Vp the pore size distribution and other methods applied to determine physical or chemical parameters of the acidic carbonaceous materials according to the invention are described in more detail in the experimental section and all ranges and values of such parameters disclosed in this application are given with reference thereto.

It is known to those skilled in art, that due to their insolubility in commonly used media and their preparation process which typically involves a high temperature thermolysis whereby organic precursors are condensed and/or decomposed and/or rearranged, the inventive carbonaceous materials depending on the preparation conditions and precursors may have different properties such as those mentioned in the paragraph above.

Further, in particular functional groups may undergo oxidation or hydrolysis when in contact with air and/or other oxidants and/or humidity. Therefore, the carbonaceous materials according to the invention may also have a content of hydroxyl or carbonyl groups.

Therefore, the claimed materials may alternatively or additionally also be specified by their preparation process.

In a preferred embodiment the inventive acidic carbonaceous materials are prepared by a process comprising at least the steps of
a) providing a starting material comprising at least a sulfur source and a carbon source
b) heating the starting material provided in step a) to a temperature of 700°C to 1000°C, preferably 720°C to 980°C, more preferably 740°C to 970°C and even more preferably 750°C to 950°C.

In step a) a starting material comprising at least a sulfur source and a carbon source is provided.

A carbon source may be any material or compound that can be converted into a carbonaceous material. Such materials and compounds include biomass and materials and compounds obtainable therefrom as well as materials and compounds from fossil carbon sources or derived therefrom.

As used herein the term "biomass" denotes a material or a compound (such as specific alcohols, fatty esters or proteins) comprising at least 95 % carbon from a "new carbon" source as measured by ASTM test method designated as D 6866, "Determining the Biobased Content of Natural Range Materials Using Radiocarbon and Isotope Ratio Mass Spectrometry Analysis", incorporated herein by reference in its entirety. This test method measures the ¹⁴C/¹²C isotope ratio in a sample and compares it to the ¹⁴C/¹²C isotope ratio in a standard 100% new carbon material having a ¹⁴C content of about 1.25·10⁻¹⁰ % calculated with respect to the total carbon atoms to give percent biobased content of the sample.

Suitable biomass includes biomass such as wood, straw, leaves, fruits and vegetables, rice husks, flour, sugar, plant fiber, nut shells, natural oils and greases, agricultural and/or forestry waste such as sawdust, wastes from lumber milling, waste material from the manufacture of wood products, furniture, and/or construction materials; animal waste, municipal waste, and the like.

Materials derived from biomass denote materials obtainable by chemical functionalization or chemical conversion of biomass and in particular include protein rich waste, cellulose, hemicellulose, kraft lignin, hydrolyzed lignin, milled wood lignin, dioxane lignin and enzymatically liberated lignin as well as lignosulfonates.

Lignosulfonates are water-soluble anionic polyelectrolyte polymers which are obtained as byproducts from the production of wood pulp using sulfite pulping as disclosed e.g. in Lebo, Stuart E. Jr.; Gargulak, Jerry D.; McNally, Timothy J. (2001), "Lignin", Kirk-Othmer Encyclopedia of Chemical Technology, John Wiley & Sons, Inc. [14] and H. Luo, M. M. Abu-Omar, "Chemicals from Lignin", Encyclopedia of Sustainable Technologies, 2017, p. 573 to 585 [15]. Typically, lignosulfonates are obtained or used as sodium, potassium, magnesium or calcium salts or as mixtures thereof.

During delignification in sulfite pulping ether bonds linking the main components together are cleaved to form reactive electrophilic carbocations at the α-carbons attached to the aromatic rings which then react with sulfite to form sulfonates.

The sulfur content of lignosulfonates is typically from 2.0 to 10.0 wt-% , preferably from 3.0 to 8.0 wt.-%.

Depending on the original type of wood employed for sulfite pulping, the molecular weight of lignosulfonates may range from 500 to 400,000 g/mol , preferably from 2,000 g/mol to 20,000 g/mol.

A sulfur source may be any organic or inorganic material comprising sulfur and are preferably non-gaseous at temperatures below 100°C. Suitable sulfur sources encompass elemental sulfur, inorganic and organic salts of sulfuric, sulfurous and thiosulfuric acid and the aforementioned free acids as such, organic sulfides and disulfides such as methionine, cysteine and methionine and/or cysteine comprising proteins, sulfoxides, sulfones and sulfonic acids and their salts such as lignosulfonates. Some of the above mentioned sulfur sources and carbon sources may simultaneously serve as sulfur source as well as a carbon source and are thus preferred. Examples include heavy fuel oils such as high sulfur fuel oil (HFSO), sulfur vulcanized rubbers, sulfonated polystyrenes, sulfur dyes and lignosulfonates whether isolated or as so-called brown liquor as byproduct from sulfite pulping.

A particular preference is given to waste materials like sulfur vulcanized rubbers for example in form of tyre scrap and lignosulfonates which are produced at megaton scale annually and thus are available at very low cost.

Most preferred as a sulfur source and carbon source are lignosulfonates.

In the starting material is composed of several materials and compounds being either a carbon source or a sulfur source or both, their ratio is selected such that the sulfur content in the final acidic carbonaceous material is obtained at the desired level. In this case one skilled in the art may easily determine a suitable composition of the starting material by very few orienting experiments.

The starting materials employed in step a) may further comprise at least one porogenic material other than the carbon source and/or the sulfur source.

As used herein a porogenic material denotes any material that is capable of forming pores
i) by liberation or formation of gaseous compounds at the reaction conditions of step b) and/or
ii) by forming or being an inert template material at the reaction conditions of step b).

Suitable porogenous materials include inorganic carbonates and hydrogen carbonates such as calcium carbonate, sodium carbonate, sodium hydrogencarbonate, potassium carbonate, potassium hydrogen carbonate, inorganic formates, acetates and oxalates such as calcium acetate, calcium formate, calcium oxalate and zinc oxide.

A particulary preferred progenous material is zinc oxide, in particular zinc oxide with a particle size of 200 nm or less, preferably 10 to 200 nm and more preferably 10 to 50 nm. Such zinc oxide is commercially available e.g. as zinc oxide nanopowder with a particle size of 20 nm.

While for example, calcium carbonate liberates carbon dioxide at elevated temperatures the mode of pore formation of zinc oxide is different. At the temperatures required in step
b) zinc oxides reacts with carbon in a carbothermal reaction to form elemental zinc and carbon monoxide, whereby pores are formed by carbon consumption and zinc serving as a hard template before it is evaporated and removed from the acidic carbonaceous material (boiling point of zinc: 907°C).

The zinc metal evaporating out of the material might be recovered e.g. by condensation on a cooled part of a surrounding surface.

Some of the sulfur sources mentioned above, in particular inorganic and organic salts of sulfuric, sulfurous and thiosulfuric acid may simultaneously serve as sulfur source as well as a porogenous material so that the addition of a porogenous material other than the caron and/or sulfur source is not necessary to achieve the desired effect, but of course possible.

The starting materials employed in step a) may (further) comprise at least one binder, in particular where it is desired to obtain the inventive acidic carbonaceous materials as shaped materials.

As used herein a binder denotes any material that is capable of reacting with the sulfur source and/or the carbon source at the conditions of step b).

Suitable binders include urea, methyl cellulose, hydroxypropyl cellulose, hydroxyethyl methylcellulose and hydroxypropyl methylcellulose, sodium metasilicate, clays, glutene, polyethyleneimine e.g. as a 50 wt-% solution in water, food starch, montmorillonite.

In one embodiment the components of the starting materials are mixed and, where only solid materials are employed, ground to allow further mixing. Grinding can be accomplished e.g. by using a ball mill, a rod mill a stirred mill or a vibrating mill.

The amount of porogen, if present, is typically in a range of 0.1 to 35 wt.-%, preferably 5 to 25 wt-% and more preferably 10 to 25 wt-% based on the dry weight of the starting material.

The amount of binder, if present, is typically in a range of 0.1 to 15 wt.-%, preferably 2 to 10 wt-% and more preferably 3 to 10 wt-% based on the dry weight of the starting material.

While the provision of the starting material may occur in any form, i.e. as a solid material or mixture, an aqueous slurry or solution it is preferred to provide the starting material with a water content of 10 wt-% or less, preferably 5 wt-% or less before subjecting it to step b). Larger amounts of water are not prohibitive but prolong the conversion in step b).

In one embodiment the starting material is shaped before subjecting it to step b). Shaping may occur to any desired form such as granules, strings, pellets, rings, tablets, sheets, spheres and with any known device suitable therefor such as extruders with suitable cutting means, presses, rollers and the like.

In step b), the starting material, whether shaped or not is heated. Preferably, heating according to step b) is effected for a duration of at least 60 minutes, preferably at least 90 minutes for at least 2 hours, for example for 2 to 24 hours or 2 to 12 hours. Longer reaction times are possible but virtually don't add any advantage, shorter reaction times may result in insufficient carbonization and inhomogeneous reaction.

Typically, conversion of the starting material to the acidic carbonaceous materials according to the invention is accompanied by loss of volatile components such as water, carbon monoxide, carbon dioxide and sulfur dioxide. To account for that, in one embodiment the heating to the desired temperature or temperature range is effected with a temperature rise of e.g. 1 to 15°C per minute, preferably 3 to 5°C per minute e.g. starting from ambient temperature. In order to properly dry the starting materials and to improve cross-linking between different components the temperature rise may be interrupted once or more, e.g. twice by times of stable temperature plateaus. Such temperature plateaus may be between 50°C and 300°C for example at 60°C or 120°C. The invention encompasses of course also other heating profiles fulfilling the same purpose.

Step b) can be carried out in any vessel suitable for that purpose. This includes ceramic crucibles, glass or quartz ampoules, reactors made or lined with a temperature resistant material as long as these vessels are sufficiently stable and inert under the reaction conditions employed.

Heating in step b) can be accomplished in any device known to those skilled in the art and include heating in an oven, a muffle oven, a rotary kiln, a solar furnace and the like.

To avoid oxidative degradation of the products step b) is preferably carried out in the substantial absence of oxygen. Substantial absence of oxygen means a partial pressure of oxygen of 10hPa or less and includes performance of step b) in vacuo or under an inert atmosphere e.g under nitrogen or argon gas.

The total reaction pressure is not specifically limited, and the pressure in step b) may be from 1 hPa to 50 MPa, preferably from 900 hPa to 5 MPa, even more preferably under ambient pressure.

Depending on the components employed as a starting material, the process may comprise a further step c) i.e. washing the acidic carbonaceous material obtained in step
b) and to the extent necessary and depending on the intended application a further step
d) i.e. drying, preferably to a residual water content of 2 wt-% or less.

Washing may occur e.g. with water to remove residual inorganic salts or dilute acids to remove zinc or residual zinc oxide.

It was found that the acidic carbonaceous materials according to the invention are thermodynamically more stable than other carbonaceous material or carbon materials reported so far.

It is known e.g. from P. U. Singare, R. S. Lokhande , and R. S. Madyal, "Thermal Degradation Studies of Polystyrene Sulfonic and Polyacrylic Carboxylic Cationites", Russian Journal of General Chemistry, 2010, Vol. 80, No. 3, pp. 527-532 [16] that organic sulfonic and carboxylic acids are degraded under liberation of sulfur dioxide and carbon monoxide and carbon dioxide respectively when exposed to temperatures over 400°C for a longer time.

In view thereof and the preparation conditions outlined above the acidity of the carbonaceous materials according to the invention cannot be explained by the presence of substantial amounts of sulfonic acid or carboxylic groups.

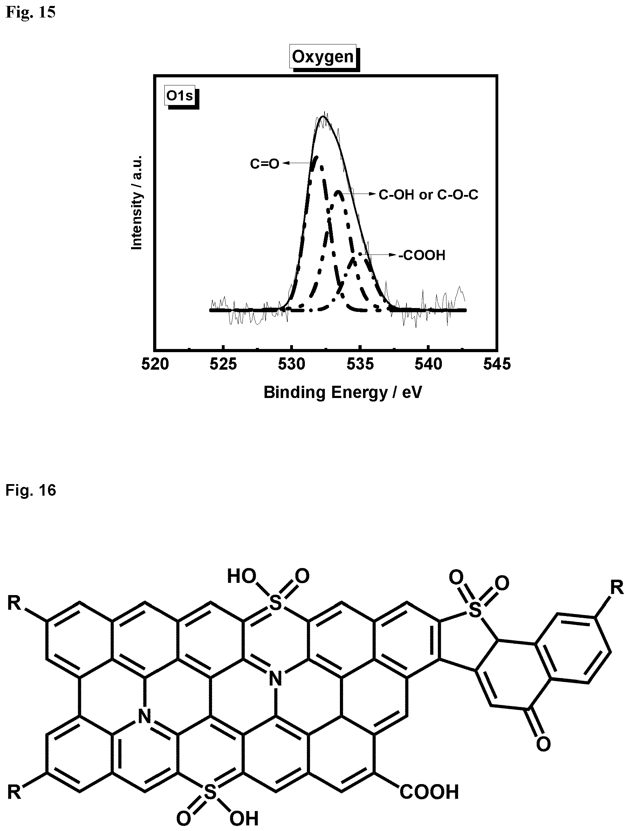

So, without wanting to be bound by theory, it is assumed that upon carbonization in step b) other sulfur containing moieties are formed and that the carbonaceous materials according to the invention comprise at least one of the structural units selected from 1-thiabenzene-1-hydroxide-1-oxide, 1-thia-4-aza-benzene-1-hydroxide-1-oxide and thiophene S,S-dioxide as depicted in Figure 15. Such structural units incorporated in an polyaromatic ring system are highly thermally stable and either exhibit or induce in alpha-position thereto a high Brønstedt and Lewis acidity.

The anticipated structures are supported by different structural characterization techniques such as x-ray diffraction (XRD), x-ray photoelectron spectroscopy (XPS), temperature programed desorption of ammonia (NH₃-TPD) and elemental analysis as further outlined in the experimental part.

Therefore, in one embodiment, the acidic carbonaceous materials according to the invention exhibit two overlapping peaks for sulfur with a common maximum between 168.0 and 170.0 eV for S2p_{3/2} and S2p_{1/2} as measured by x-ray photoelectron spectroscopy (XPS).

### Applications

According to one aspect of the invention there is provided a process for the acid catalyzed conversion of organic compounds wherein the conversion is carried out in the presence of at least an acidic carbonaceous material according to the invention.

Therefore, the invention also encompasses the use of the acidic carbonaceous materials according to the invention as an acidic catalyst.

Acid catalyzed reactions include degradation reactions, condensation and dehydration reactions, hydrolysis reactions, alkylation reactions, isomerization reactions, as well as esterification and transesterification reactions.

As used herein the degradation of organic compounds includes all reactions wherein molecules with higher molecular mass are converted into molecules with lower molecular mass and includes reactions also denoted as depolymerization, cracking etc.

Specifically, the aforementioned degradation reactions include the following reaction types:
A) Cracking of long-chained hydrocarbons such as crude oil or fractions thereof such as paraffins, waxes, heavy oil, or hydrocarbon plastics such as polystyrenes, polypropylenes or polyethylenes
B) Depolymerization of polyesters, polycarbonates, polyurethanes, polyamides and polyacetals by hydrolysis or, for polyesters additionally transesterifications with C₁ to C₈-Alcohols.

Cracking of plastic materials, in particular hydrocarbon plastics such as polystyrenes (PS) and polyolefins such as high density polyethylene (HDPE), low density polyethylene (LDPE), and polypropylene (PP) has attracted considerable interest to reduce the carbon dioxide footprint and marine pollution. It is a major finding of the invention that cracking of such plastics in particular hydrocarbon plastics directly from waste streams or sorting plants can be effected with unprecedented efficiency and at low cost.

Therefore, one aspect of the invention encompasses a process for the cracking of waste plastic wherein the inventive acidic carbonaceous materials as used as a catalyst.

In one embodiment the waste plastic comprises at least 70 wt-% of one or more hydrocarbon plastics, preferably selected from HDPE, LDPE; PP and/or PS calculated on the total amount of plastics presents in the plastic waste. Other plastics being present may include polyvinylchloride, polyvinylidene chloride, polyethylene terephthalate (PET), polybutylene terephthalate (PBT), polycarbonate (PC), polyurethane (PU), acrylonitrile-butadiene-styrene (ABS), nylon and fluorinated polymers.

Preferably the content of hydrocarbon plastics preferably HDPE, LDPE; PP and/or PS calculated on the total amount of plastics present in the waste plastic is at least 80 wt.-%, more preferably 90 wt-% and even more preferably at least 95 wt.-%.

In one embodiment the waste plastic is essentially free of thermosetting polymers. Essentially free in this regard is intended to denote a content of thermosetting polymers of less than 5, preferably less than 2 and even more preferably less than 1 wt % of the plastic waste.

The waste plastic may be plastic waste obtained from waste sorting plants, from waste collections such as marine waste collections, from manufacturing plants where the plastic waste is a by-product from the production of plastic goods or from any other source.

The waste plastic used in the process of the invention may be a single plastic or a mixture of two or more different plastics (mixed waste plastic).

Usually, waste plastic contains other non-desired components, namely foreign material, such as paper, glass, stone, metal, etc.

In the context of the present invention whenever it is referred to the weight of the waste plastic or the weight of the polystyrene and polyolefin in the waste plastic, this weight relates to the weight of the dry plastic without any foreign material being admixed with the plastic. However, the weight includes any components in the plastic, such as the above described additives.

The process can be performed in any vessel known to be suitable for that purpose i.e.for example in a stirred reactor, a rotary kiln, a bubbling fluidized bed reactor or a circulating fluidized bed reactor riser or downer. A rotary kiln is a cylindrical vessel, weight might be inclined slightly to the horizontal, which is rotated slowly about its axis. The waste plastic to be cracked may be fed into the upper end of the cylinder. As the kiln rotates, the waste plastic gradually moves down towards the lower end, and undergoes a certain amount of stirring and mixing. Generally a cyclone system is used to separate the fluid, which can undergo downstream processing, from the solid, which is recirculated to the reactor. These reactors can be either upflow for risers, or downflow for downers.

In a bubbling fluidized bed reactor a fluid (gas or liquid) is passed through the acidic carbonaceous material serving as a catalyst at high enough velocities to suspend the material and cause it to behave as though it were a fluid. In a circulating fluidized bed, also called transport reactor, the acidic carbonaceous material and the fluid flow cocurrently at high speed.

The waste plastic and the acidic carbonaceous material according to the invention can be introduced to the desired vessel simultaneously or subsequently.

The introduction can be performed either batchwise or continuously.

Preferably, the acidic carbonaceous material and the waste plastic are introduced continuously.

In the vessel, in presence of the acidic carbonaceous material, at least a portion of the mixed waste plastic is converted to gases, liquid fuels and waxes.

The determination of a suitable reaction temperature range during the processes according to the invention inter alia depends on the waste plastic to be converted and whether a solvent is present or not. However, as a general guideline the process is carried out at a temperature of from 280°C to 550°C, preferably from 300°C to 500°C and more preferably from 320°C to 400°C.

In the catalytic cracking of hydrocarbon plastics several fractions of chemical compounds are typically obtained. Usually, there is a gas fraction sometimes also referred to as "gases" or "off-gases" containing light weight chemical compounds with up to four carbon atoms. The gasoline fraction contains compounds having a low boiling point of for example below 216°C. This fraction includes compounds having 5 to 11 carbon atoms. The kerosene and diesel fraction has a higher boiling point of for example 216°C to 369°C. This fraction generally contains compounds having 12 to 22 carbon atoms. The even higher boiling fraction is generally designated as (pyrolysis) wax.

The reaction time may for example be from 5s to 24 hours, preferably from one minute to 6 hours, more preferably and typically from 30 minutes to 3 hours.

Where continuous processes are performed the reaction time denotes the average residence time calculated based on input, output and vessel content.

The amount of acidic carbonaceous material employed is not critical at all and may for example be from 0.1 wt-% to 1.000 wt-%, preferably from 1 wt-% to 100 wt-%, more preferably from 2 wt-% to 25 wt-% based on the organic compound to be converted.

The reaction pressure may vary from 100 hPa to 10 MPa, preferably from 900 hPa to 1 MPa and more preferably from 900 hPa to 0.2 MPa, e.g. under ambient pressure.

In one embodiment the reaction pressure is the autogenic pressure generated when heating up the acidic carbonaceous material and the hydrocarbon plastic and optionally the solvent to the desired temperature in a closed reactor.

The processes according to the invention may be carried out without adding a solvent. However, in some embodiments the addition of liquid products e.g. those with 5 to 11 carbon atoms obtained in a previous run or solvent is advantageous to facilitate cracking in particular at the beginning of the reaction.

A major advantage of the present invention is the possibility to perform a large variety of acid catalyzed synthetic processes at a broad range of conditions and with high conversion using the inventive acidic carbonaceous materials. Further the acidic carbonaceous materials are easy-to-make and can be recycled numerous times without notable loss of activity.

In the following, the present invention is illustrated by examples which however not intended to limit the scope of invention.

### Experimental section:

### 1. Methods

### 1.1 Elemental analysis (EA)

Elemental analysis (EA) of C, H, S, O, and N was performed using a Vario-MICRO cube CHNOS elemental analyzer. Prior to the analysis, the samples were finely ground (< 125 µm). The content of sodium for sodium-lignosulfonate was determined by inductively coupled plasma optical emission spectroscopy (ICP-OES) using an Optima 8000 ICP-OES from PerkinElmer. Prior to the analysis, the samples (0.1 mg) were finely ground and digested for 13 hours in 500 µL of Aqua Regia solution (i.e. 333 µL of HCL (assay: 37 wt-%) and 167 µL of HNO₃ (assay: 70 wt-%)).

### 1.2 N₂ physisorption

The N₂ physisorption measurements were accomplished with nitrogen (N₂) at -196°C, after degassing the respective sample (0.1 g) at 423 K for 20 h under vacuum, using a Quantachrome Quadrasorb SI porosimeter. The specific surface area SSA_{BET} was calculated by applying the Brunauer-Emmet-Teller (BET) model in the relative pressure region of (0-0.05) for the adsorption branch (A_{BET}). The total pore volume was calculated at a relative pressure (p p₀⁻¹) of 0.99 using the program QuadraWin Version 5.1. Besides, the pore size distribution and the average pore size were also determined using the program QuadraWin Version 5.1 selecting the option quenched solid density functional theory (QSDFT) for slit/cylindral pores applied in the nitrogen N₂ adsorption isotherm.

### 1.3 Scanning electron microscopy (SEM) coupled with energy-dispersive X-ray (EDX)

SEM-EDX investigations were recorded with a JEOL JSM-7500F instrument coupled a Link ISIS-300 system equipped with a Si (Li) detector operated with an energy resolution of 133 eV.

### 1.4 Temperature programmed desorption of ammonia (NH₃-TPD)

NH₃-TPD was used for the characterization and quantification of the total acid sites density of the acidic carbonaceous material. The NH₃-TPD measurement performed using an AMI-300 chemisorption analyzer equipped with a thermal conductivity detector (TCD) from Altamira Instruments. In each measurement, 0.05 g of the sample were placed between two layers of quartz wool in the measurement cell (quartz U-tube). First, the sample was treated at 393 K in a Helium flow (40 ml/min) for 1 h. Afterwards, the sample was saturated with ammonia (NH₃) at 323 K using a 50 ml/min gas stream of ammonia (NH₃, 20 vol-%) and Helium (He, 80 vol-%) flowing over the sample for 5 h. Second, residues of non-adsorbed ammonia (NH₃) were removed by flowing Helium (40 ml/min) over the sample for 30 min. To ensure a complete saturation of the samples, 50 pulses of 509 µL each of a mixture ammonia (NH₃, 20 vol-%) and Helium (He, 80 vol-%) were flown over the sample at 323 K with a time gap of 300 seconds between each pulse. Finally, the ammonia (NH₃) desorption profile was recorded by increasing the temperature from 323 K to 923 K with 10 K min⁻¹ with dwell of 90 min at 923 K.

### 1.5 X-ray photoelectron spectroscopy (XPS)

XPS measurements were conducted using CISSY Equipment under ultrahigh vacuum (UHV, 1.5x10⁻⁸ Pa) with a SPECS XR 50 X-ray gun with Mg Kα (1254 eV) radiation source and combined with a lens analyzer module (CLAM). The binding energy was calibrated with Au4f_{7/2} as a reference. The binding energy determination and the peak deconvolution has been made using the software IGOR.7.00.x-1.3-01 to extract the data from the XPS device and CasaXPS software version 2.3.24 (for the deconvolution). For the background a Shirley function was used for fitting x-ray photoelectric spectra, while for the peak deconvolution a Voigt function has been selected. Previous to the analysis the sample where finely ground and dispersed on a top of a conducting tape and evacuated under UHV for 40 mins.

### 1.6 Thermogravimetric analysis (TGA)

TGA measurement was performed using a Thermo Microbalance TG 209 F1 Libra (Netzsch, Selb, Germany). In a typical experiment, 0.01 g of dried sample was placed in a Pt crucible, dried at 150° C for 2 h and then heated to 1000° C with a heating rate of 10° C min⁻¹. The heating was performed under either synthetic air (79 vol-% N₂ and 21 vol-% O₂) or N₂ flow of 20 cm³ min⁻¹.

### 2 Examples

### Examples 1 to 4:

### Example 1 - Preparation of an acidic carbonaceous material using zinc oxide as porogen

Glucose (2.67 g, 14.4 mmol), urea (2.67 g, 43.2 mmol) as binders and water (2.67 g, 144 mmol) were mixed at 90°C for 2 h with continuous stirring. Then, 48,00 g of sodium-lignosulfonate with a molecular weight of 12.390 g/mol received from Domsjö-Fabriker as carbon source and sulfour sourcewere mixed with the previously prepared glucose, urea and water mixture, 36,00 g (442 mmol) zinc oxide (ZnO) nanoparticles with a particle size of 20 nm and H₂O (8 g, 444 mmol) to provide a consistency suited for later extrusion using a commercial kitchen kneader (Bosch, professional home series, model MUMVH48BCN). The resulting mixture was extruded and cut in pellets with dimensions of 1 mm (diameter) and 1.5 mm (length) using a commercial noodle extruding machine (La Monferrina P3) equipped with a 1 mm PTFE die and automatic cutting knife. The extruded pellets were dried at 60°C for 12 h. Then, the dried pellets were carbonized at 950°C under N₂ atmosphere using a three-step program: (i) purging the oven atmosphere with N₂ at room temperature for 30 min; (ii) increasing the temperature to 120°C at a heating rate of 3°C min⁻¹ and maintaining it for 2 h to remove water; (iii) elevating the temperature to 950°C at a heating rate of 3°C min⁻¹ and finally maintaining the temperature at 950°C for 2 h, before cooling the product down to room temperature. The resulting pellets of the acidic carbonaceous material were washed using 0.1 M HCI solution under continuous stirring for 10 h to remove potential residues of zinc from the pellet, followed by subsequent washing with distilled water (2 L) to remove any remaining traces of HCI.

The acidic carbonaceous material was then analyzed:
Elemental composition of the starting material, sodium lignosulfonate and the product was determined by elemental analysis as described above. The results are given in table 1.

**Table 1. Elemental composition, i.e., C, S, H, O, N and Na for Na-Lignosulfonate (as received and employed) and the acidic carbonaceous material**

| | C [wt.-%] | S [wt.-%] | H [wt.-%] | O [wt.-%] | N [wt.-%] | Na [wt.-%] |
|---|---|---|---|---|---|---|
| sodium-lignosulfonate | 40 | 8.0 | 4.0 | 36 | 1.4 | 10 |
| acidic carbonaceous material (ex. 1, inventive) | 64 | 7.9 | 1.7 | 25 | 1.4 | 0 |

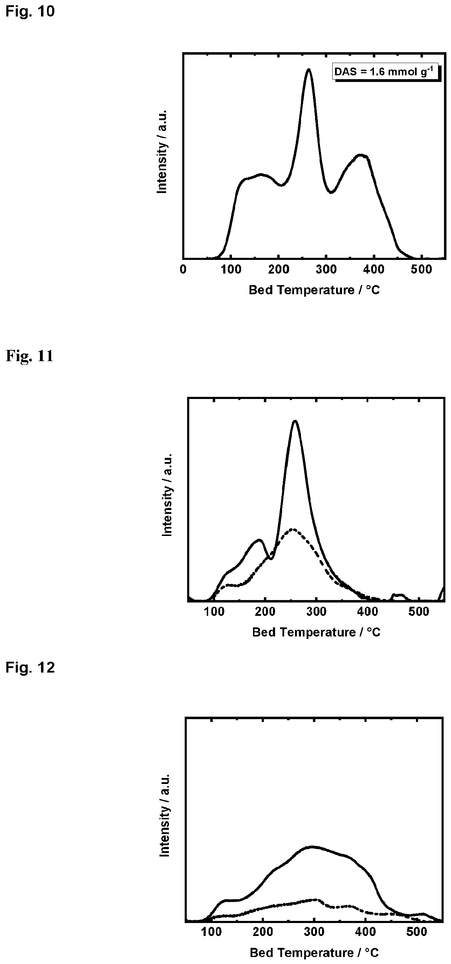

The density of acid sites (DAS) was assessed by NH₃-TPD as described above and shows three different NH₃ desorption peaks corresponding to weak (150°C), medium (250 °C) and strong (390°C) acidic sites with a total density of acid sites of 1.6 mmol g⁻¹ (see Figure 10).

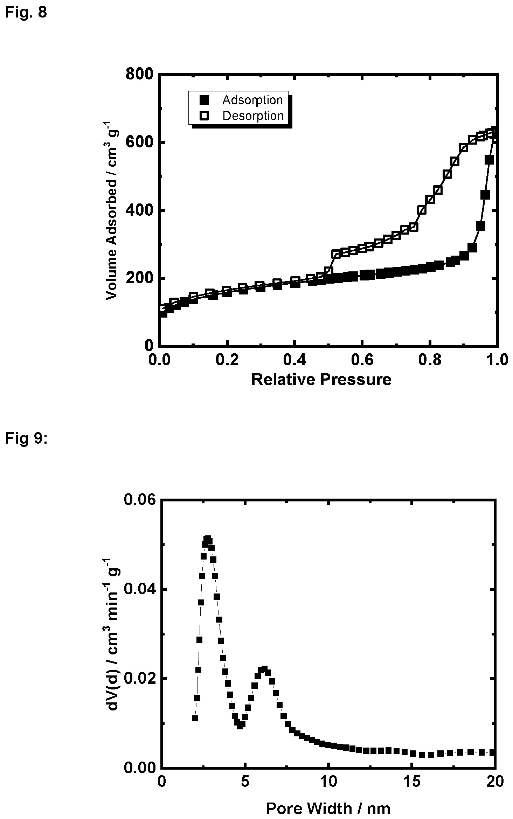

The inventive material exhibits a porous structure as shown by N₂ physisorption isotherms (see Figures 8 and 9) with coexistence of micro- and mesopores, a specific pore volume of 0.4 and a pore width between 2 and 6 nm.

The specific surface area (SSA_{BET} was 664 m²/g)

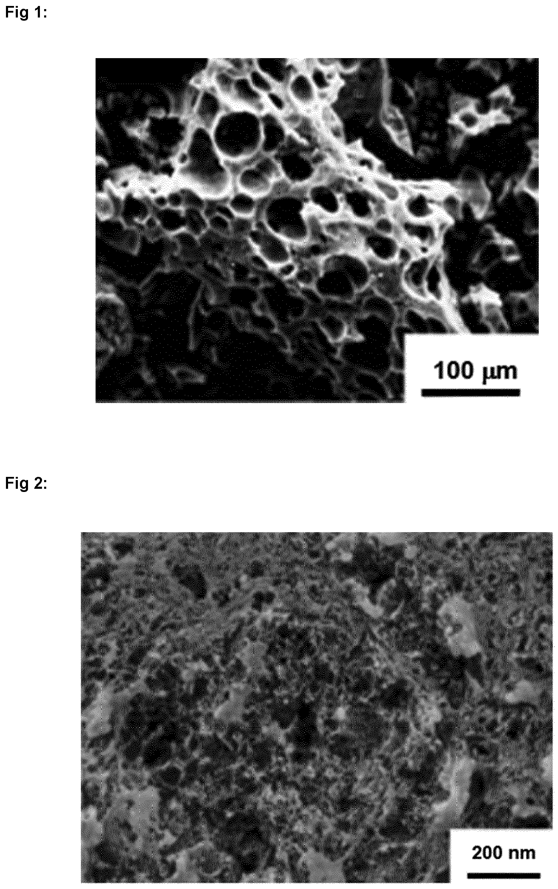

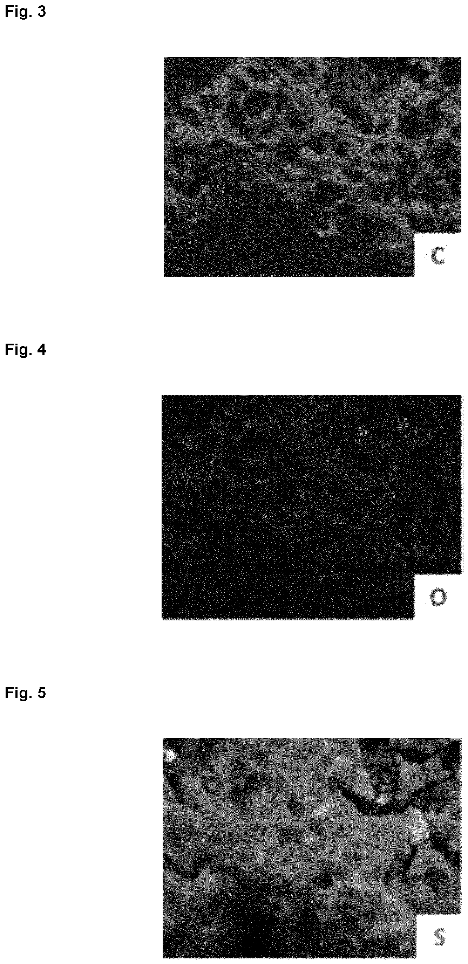

The images taken with Scanning Electron Microscopy (SEM) coupled with energy dispersive X-ray spectroscopy (EDX) demonstrate the homogeneity of the product (see figures 1 and 2). Moreover, SEM-EDX images show the presence of homogenous porous structure with micro- and mesoporous which in-line with N₂ physisorption isotherms, as well as uniform element distributions of C, O and S (see Figures 3 to 5).

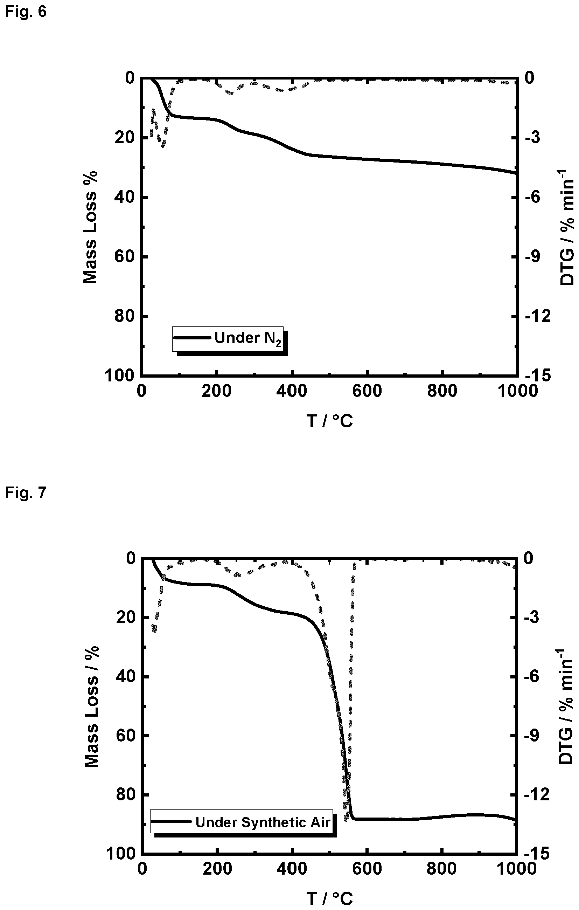

The inventive acidic carbonaceous material showed a high thermal stability with only a minor mass loss of 25 wt.-% up to 500°C in synthetic air and a mass loss of less than 32 wt-% up to 800°C under nitrogen (N₂), which was confirmed via TGA analysis (see Figures 6 and 7).

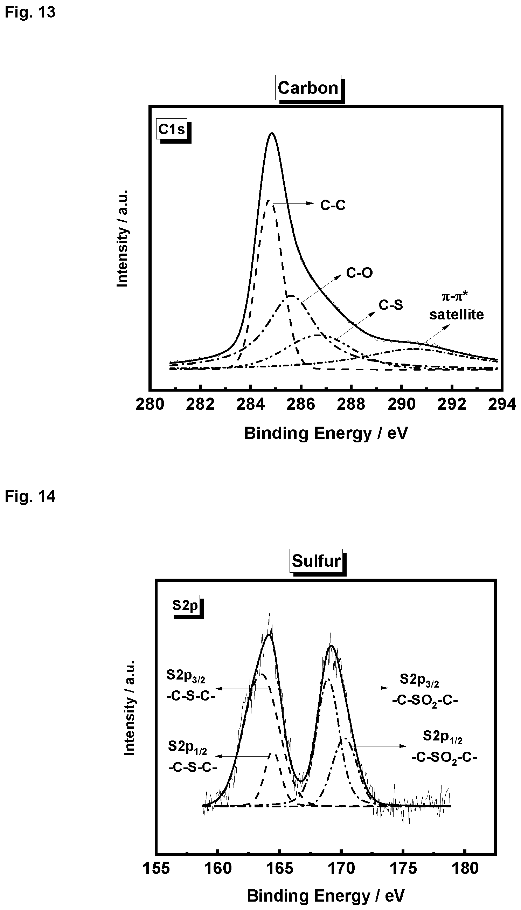

In indication of the chemical nature of the acidic species was derived from XPS analysis (see Figures 13 to 15), which indicates the presence of a medium oxidized sulfur species, similar to sulfones and with a binding energy for sulfur S2p_{3/2} and S2p_{1/2}of 169 eV (common visible maximum of the two peaks). Beside the sulfone-like groups, different carbon edge termination acidic functional groups, i.e., -COOH and C-OH were found, which explain the three peaks in the NH₃-TPD profile. The proposed structure also complies well with the reactivity of the starting sulfonate groups of the sodium-lignosulfonate, which readily undergo a second alkylation with activated aromatic groups at elevated temperatures.

Based on these characterization results a exemplified and partial structure is proposed in Figure 16.

### Examples 2a,b,c and d - Preparation of an acidic carbonaceous material using a hard template and additional sulfur source

6.0 ml of water were kneaded with 10.0 gr of sodium-lignosulfonate with a molecular weight of 12,390 g/mol received from Domsjö-Fabriker. Then, 10.0 g (63 mmol) of sodium-thiosulfate (examples 2a, 2b) or 10.0 g (70 mmol) of sodium-sulfate (examples 2c, 2d) were thoroughly mixed in to serve as a hard template and potential sulfur source using a kitchen kneader. The resulting mixture was flattened to using a roller pin and then dried at 110°C for 10 hours.

Then, the dried mass was carbonized 750°C (examples 2a and 2c) or 900°C (examples 2c and 2d) under a N₂ atmosphere using a three-step program: (i) purging the oven atmosphere with N₂ at room temperature for 30 min; (ii) increasing the temperature to the indicated temperature at a heating rate of 2.5°C min⁻¹ and (iii) maintaining it for 1 h, before cooling the product down to room temperature. The resulting material was ground using a mortar and washed with 1000 ml of water for 10 h to remove the salts.

The acidic carbonaceous materials were then analyzed:
Elemental composition, specific surface area, pore volume and density of acidic sites were determined as described above and are shown in table 2.

| acidic carbonaceous material according to example | DAS [mmol/g] | SSA_{BET}[m²/g | Vₚ [cm³/g] | C [wt.-%] | S [wt.-%] | H [wt.-%] | N [wt.-%] |
|---|---|---|---|---|---|---|---|
| 2a | 1.1 | 581 | 0.2 | 67.1 | 18.2 | 0.6 | 1.2 |
| 2b | 0.5 | 907 | 0.4 | 77.6 | 8.2 | 0.4 | 1.1 |
| 2c | 0.9 | 565 | 0.2 | 78.3 | 7.5 | 0.8 | 1.4 |
| 2d | 0.8 | 1139 | 0.7 | 88.7 | 3.2 | 0.5 | 1.4 |

The NH₃-TPD plots are shown in Figure 11 (for examples 2a and 2b using sodium thiosulfate as a hard template) and Figure 12 ((for examples 2c and 2d using sodium sulfate as a hard template).

For all acidic carbonaceous materials a typical main peak in the area of 240°C to 320°C corresponding to medium acidic sites was observed.

### Example 3

In a ordinary stirred glassware with reflux condenser 0.5 g of acidic carbonaceous material obtained according to example 1 was mixed with 5.0 g of high density polyethylene (obtained from Sigma) and heated to 350°C under a nitrogen atmosphere for two hours at a stirrer rate of 600 rpm. A rapid degradation of the polymer was observed, while a supernatant liquid formed.

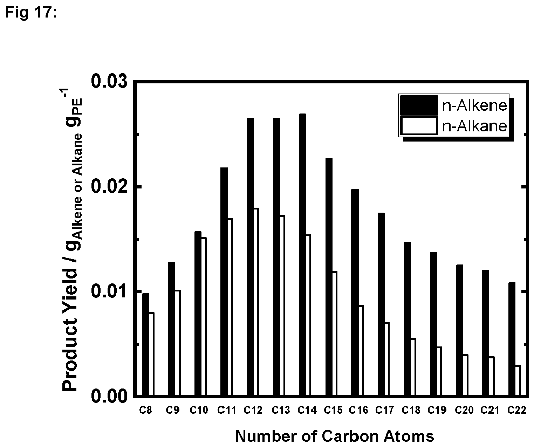

Weighing of the reaction products showed that 18 wt-% of the polymer were removed with the gas phase (calculated from the mass loss of the polymer after the reaction) which indicates the formation of light hydrocarbons (C₁-C₄). The alkanes and alkenes C₅-C₇ could not be reliably quantified as they appeared before the solvent (cyclohexane) signal (RT = 4.79 min) in the GC-FID. The product distribution resulting from polymer decomposition and measured using GC-FID clearly shows the formation of mainly alkenes and alkanes in a range between C₈ and C₂₂ with a total alkenes yield of 15 wt-% and an alkane yield of 27 wt-% (see Figure 17). For products with more than C₂₂ a reliable quantification could not be made using GC-FID. The pyrolysis wax fraction C₂₃ to C₄₀ accounted for around further 40 wt-% of the reaction products. These results clearly shows smooth degradation of HDPE using the inventive acidic carbonaceous materials as a catalyst.

### Example 4

In a 250 ml reactor, 0.5 g of acidic carbonaceous material obtained according to example 1 was mixed with 1.0 g of neat solid sorbitol and heated to 180°C under a nitrogen atmosphere for 2 hours. 90 % of the sorbitol was converted with isosorbide being the main product (50 % of theory).

### Example 5

In a 250 ml reactor 0.5 g of acidic carbonaceous material obtained according to example 1 was mixed with 1.0 g of glucose in 100 ml of water and heated to 180°C under a nitrogen atmosphere for 4 hours. 85 % of the glucose was converted with 5-hydroxymethylfurfural being the main product (26 % of theory) besides fructose, furfural, lactic acid, acetic acid, levulinic acid and formic acid.

Examples 4 and 5 clearly shown the suitability of the inventive acidic carbonaceous material to serve as a dehydration and/or isomerization catalyst.

## Claims

**1.** An acidic carbonaceous material comprising
1) a sulfur content as measured by elemental analysis of 0.6 to 20.0 wt.%, preferably 1.0 to 20.0 wt-% and more preferably 3.0 to 20.0 wt-% and
2) a density of acidic sites (DAS) as measured by temperature programmed desorption of ammonia (NH₃-TPD) of at least 0.1 mmol/g, preferably at least 0.4 mmol/g, more preferably 0.4 to 5.0 mmol/g and yet even more preferably 0.4 to 2.0 mmol/g
3) a carbon content of at least 50 wt-%, preferably of at least 60 wt-% and
4) a hydrogen content of at maximum 5.0 wt.-%, preferably 0.1 to 3.0 wt-% and more preferably 0.3 to 2.0 wt.-%.

**2.** The material according to claim 1, further comprising a nitrogen content of at maximum 3 wt.-%, preferably 0.1 to 3.0 wt-% and more preferably 1.0 to 1.8 wt-% as measured by elemental analysis.

**3.** The material according to claim 1 or 2, further comprising an oxygen content of at maximum 25.0 wt.-%, preferably 0.1 to 25.0 wt.-%, more preferably 5.0 to 25.0 wt-% and even more preferred of 15.0 to 25.0 wt-% as measured by elemental analysis.

**4.** The material according to any one of claims 1 to 3, having a pore volume (Vₚ) of 0.2 to 0.8 cm³/g, preferably of 0.2 to 0.7 cm³/g.

**5.** The material according to any one of claims 1 to 4, having mesopores in the size range of 2 to 10 nm accounting for 70 % or more of the total pore volume, preferably for 80 % or more.

**6.** The material according to any one of claims 1 to 5, having a specific BET surface area (SSA_{BET}) of 100 to 2000 m²/g, preferably of 200 to 1500 m²/g, more preferably of 400 to 1200 m²/g.

**7.** The material according to any one of claims 1 to 6, exhibiting at least one relative maximum in the range of from 240°C to 270°C and one relative maximum in the range of from 370°C to 400°C in the temperature profile as measured by temperature programmed desorption of ammonia (NH₃-TPD).

**8.** The material according to any one of claims 1 to 7, exhibiting two peaks for sulfur showing a common maximum between 168.0 and 170.0 eV for S2p_{3/2} and S2p_{1/2} as measured by x-ray photoelectron spectroscopy (XPS).

**9.** A process for the preparation of the acidic carbonaceous materials according to any one of claims 1 to 8 the process comprising at least the steps of
a) providing a starting material comprising at least a sulfur source and a carbon source
b) heating the starting material provided in step a) to a temperature of 700°C to 1000°C, preferably 720°C to 980°C, more preferably 740°C to 970°C and even more preferably 750°C to 950°C.

**10.** The process according to claim 9, wherein the starting material further contains one or two of the following components:
i) a porogenic material, preferably a porogenic material selected from inorganic carbonates and hydrogen carbonates, inorganic formates, acetates and oxalates and zinc oxide, more preferably zinc oxide, and even more preferably zinc oxide with a particle size of 200 nm or less, preferably 10 to 200 nm and more preferably 10 to 50 nm.
ii) a binder capable of reacting with the sulfur source and/or the carbon source at the conditions of step b), preferably a binder selected from urea, methyl cellulose, hydroxypropyl cellulose, hydroxyethyl methylcellulose and hydroxypropyl methylcellulose, sodium metasilicate, clays, glutene, polyethyleneimine food starch and montmorillonite.

**12.** The process according to any one of claims 9 to 11, wherein lignosulfonates are simultaneously used as sulfur source and as carbon source, preferably lignosulfonates in form of sodium, potassium, magnesium or calcium salts or as mixtures thereof.

**13.** Use of an acidic carbonaceous material according to any one of claims 1 to 8 as acid catalyst.

**14.** A process for the degradation, condensation, dehydration, hydrolysis, alkylation, isomerization, esterification and/or transesterification of one or more chemical compounds, wherein an acidic carbonaceous material according to any one of claims 1 to 8 is employed as catalyst.

**15.** The process according to claim 14, wherein waste plastic material comprising at least 70 wt-% of hydrocarbon plastics is cracked to obtain hydrocarbons.
